# EUROPEAN PATENT SPECIFICATION

(11) **EP 2 036 607 B1**
(45) Date of publication and mention of the grant of the patent: **27.02.2013**
(21) Application number: 07767081.8
(22) Date of filing: 08.06.2007
(51) Int. Cl.: B01J 23/63, B01D 53/94, B01J 35/00, C01G 25/02, C01B 13/36, B01J 23/00

(54) **INORGANIC OXIDE AND EXHAUST GAS PURIFICATION CATALYST MADE BY USING THE SAME**
ANORGANISCHES OXID UND DIESES ENTHALTENDER KATALYSATOR ZUR ABGASREINIGUNG
OXYDE INORGANIQUE ET CATALYSEUR DE PURIFICATION DE GAZ D'ÉCHAPPEMENT PRODUIT EN L'UTILISANT

(30) Priority: 16.06.2006 JP 2006167110
(43) Date of publication of application: 18.03.2009
(73) Proprietor: TOYOTA JIDOSHA KABUSHIKI KAISHA, Toyota-shi, Aichi-ken, 471-8571 (JP)
(72) Inventor: MORIKAWA, Akira, Aichi-gun Aichi, 480-1192, (JP); TANABE, Toshitaka, Aichi-gun Aichi, 480-1192, (JP); TAKAHASHI, Naoki, Aichi-gun Aichi, 480-1192, (JP); YAMAMURA, Kae, Aichi-gun Aichi, 480-1192, (JP); YOSHIDA, Takeru, Toyota-shi, Aichi-ken, 471-8571, (JP); SATO, Akemi, Toyota-shi, Aichi-ken, 471-8571, (JP)
(74) Representative: Kuhnen & Wacker
(86) International application number: PCT/JP2007/061660
(87) International publication number: WO 2007/145146

(56) References cited:
- EP-A2- 1 175 935
- WO-A1-2006/009327
- WO-A1-2006/016633
- JP-A- 09 262 439
- JP-A- 2002 331 238
- JP-A- 2006 035 018
- JP-A- 2006 035 019
- JP-A- 2006 036 556
- JP-A- 2006 055 836

## Description

### Technical Field

The present invention relates to an inorganic oxide and a catalyst for purification of exhaust gas obtained by using the same.

### Background of the Invention

Catalysts for purification of exhaust gas used for purifying the exhaust gas of internal combustion engines or the like are required to have very high heat resistance in order to keep high catalytic activity even when used at high temperature for a long period.

For example, a catalyst for purification of exhaust gas in which a metal having catalytic activity is supported on a support made of a particulate metal oxide has been known. For enhancing the heat resistance of such a catalyst for purification of exhaust gas, for example, Japanese Unexamined Patent Application Publication No. Hei 05-285386 (Document 1) discloses a catalyst obtained by using, as a support, a solid solution which is formed by uniformly dissolving an oxide of a rare earth element in zirconium oxide particles. Japanese Unexamined Patent Application Publication No. Hei 09-141098 (Document 2) discloses a catalyst obtained by using, as a support, one combined an aluminum oxide and an oxide of a rare earth element.

However, conventional catalysts, such as those disclosed in Documents 1 and 2, have not been still insufficient heat resistance.

Japanese Unexamined Patent Application Publication No. 2006-55836 (Document 3) discloses a particulate inorganic oxide comprising an aluminum oxide, a metal oxide forming no composite oxide with an aluminum oxide, and an additional element including at least one of rare earth elements and alkaline earth elements. In the particulate inorganic oxide, a percentage content of the additional element to a total amount of the additional element, aluminum in the aluminum oxide, and a metal element in the metal oxide is in a range from 1.5 mol% to 5.6 mol% in terms of oxide content thereof (in a range from 3.0 at% to 11.2 at% in terms of element content). At least 80% of primary particles in the inorganic oxide have a particle diameter of 100 nm or smaller. At least a part of the primary particles have a surface concentrated region where a percentage content of the additional element is locally increased in the surface layer part thereof. The Description thereof describes the inorganic oxide in which 1 % by mass to 5 % by mass in terms of oxide amount of the additional element exists in the surface concentrated region relative to a whole amount of the inorganic oxide.

However, even though a catalyst obtained by using, as a support, the inorganic oxide as described in Reference 3 has relatively high heat resistance due to improved heat resistance of the support, such a catalyst does not necessarily have sufficient heat resistance.

Further documents relate to inorganic oxides which are used in exhaust gas purifying catalysts. Particularly, the WO 2006/009327 A1 discloses a particulate inorganic oxide containing aluminium oxide, a metal oxide forming no composite oxide with aluminium oxide, and an additional element including at least one of a rare-earth metal and an alkali earth metal element, wherein the inorganic oxide contains a secondary particle formed by aggregating primary particles. Further, the WO 2006/016633 A1 discloses an exhaust gas purifying catalyst and production process therefore, wherein the exhaust gas purifying catalyst comprises first and second metal oxide supports and a noble metal supported thereon, wherein further, the first and second metal oxide supports to have a primary particle diameter less than 100nm, primary particles of the first and second metal oxide supports are mixed with each other, and the amount of the noble metal has a certain magnitude. Moreover, the EP 1 175 935 A2 discloses a composite oxide including agglomerated particles which have an average particle diameter of 20 µm or less, which are composed of a plurality of metallic element oxides being in form of fine particles having an average diameter of 50nm or less, which have a surface and an inner portion whose metallic element distributions differ form each other.

### Disclosure of the Invention

The present invention has been made in consideration of the above-described problems in the conventional techniques. An object of the present invention is to provide an inorganic oxide having excellent heat resistance and a catalyst for purification of exhaust gas obtained by using the inorganic oxide.

The present inventors have earnestly studied in order to achieve the above object. As a result, the inventors have revealed that a percentage content of a basic additional element, which generally seems to improve the heat resistance, were not necessarily in appropriate ranges in the conventional catalysts, such as the one described in the Document 3.

The present inventors have further studied in order to achieve the above object. As a result, the present inventors have discovered the following: in a particulate inorganic oxide comprising an aluminum oxide, a metal oxide forming no composite oxide with an aluminum oxide, and a specific additional element, wherein the additional element is contained in the inorganic oxide such that a concentration of the additional element locally become high in a surface layer part of a primary particle in the inorganic oxide, a percentage content of the additional element in the inorganic oxide is adjusted to be in a extremely restrictive range, and further an amount of the additional element in the region (surface concentrated region) where the concentration of the additional element is locally increased is adjusted to be in an appropriate range; thus, surprisingly, it is possible to obtain an inorganic oxide having extremely superior heat resistance. This discovery has led the inventors to complete the present invention.

The inorganic oxide of the present invention is a particulate inorganic oxide according to claim 1 comprising an aluminum oxide, a metal oxide forming no composite oxide with an aluminium oxide, said metal oxide containing zirconium oxide, and at least one additional element selected from the group consisting of rare earth elements and alkaline earth elements. In the inorganic oxide of the present invention, the content of the additional element relative to the combined total amount of aluminum in the aluminum oxide, the metal element in the metal oxide, and the additional element is in a range from 1.1 at% to 8.0 at% in terms of element content. At least 80% of primary particles in the inorganic oxide have a particle diameter of 100 nm or smaller. At least a part of the primary particles have a surface concentrated region where the content of the additional element is locally increased in a surface layer part. The content of the additional element in the surface concentrated region based on the whole amount of the inorganic oxide is in a range from 0.06 % by mass to 0.98 % by mass in terms of oxide amount.

Furthermore, in the inorganic oxide of the present invention, the metal oxide more preferably contains at least one oxide selected from the group consisting of ZrO₂, ZrO₂-CeO₂, ZrO₂-Y₂O_{3,} ZrO₂-La₂O₃, ZrO₂-Nd₂O₃, and ZrO₂-Pr₂O₃.

In the inorganic oxide of the present invention, the additional element is preferably at least one element selected from the group consisting of Y, La, Pr, Nd, Sm, Eu, Gd, Tb, Dy, Ho, Er, Tm, Yb, Lu, Mg, Ca, Sr, Ba, Sc, and Ce, more preferably at least one element selected from the group consisting of Y, La, Pr, Nd, Yb, Mg, Ca, and Ba, and particularly preferably at least one element selected from the group consisting of La and Nd.

The catalyst for purification of exhaust gas of the present invention can be obtained by supporting rhodium on the above-described inorganic oxide. Thus, the invention provides a catalyst according to claim 6.

Although it is not known exactly why the inorganic oxide having excellent heat resistance can be obtained by the present invention, the inventors speculate as follows. In the inorganic oxide formed by the above-described combination, since the aluminum oxide and the metal oxide do not form a composite oxide together with each other, primary particles comprising each of these oxides in a major proportion exist independently. Since these different primary particles aggregate together with each other to form a secondary particle, it is assumed that the primary particles serve as a barrier to diffusion of the primary particles themselves each other; thus, sintering due to fusion among the primary particles is prevented. In addition, each of the primary particles contains the additional element in the specified range described above; thus, the phase stability and crystal stability of each of the primary particles in a high-temperature environment are enhanced.

Further, the surface concentrated region where the percentage content of the additional element is locally increased is formed in the surface layer part of the primary particle constituting the inorganic particle. In other words, the region where the percentage content of the additional element is increased is formed so as to cover the surface of the primary particle. However, it is not necessarily required that the surface concentrated region completely cover the surface of the primary particle, and it is only required that the surface concentrated region cover at least a part of the surface of the primary particle. When the additional elements listed above forms oxides, the oxides are basic. Therefore, when rhodium (Rh) is supported thereon, these additional elements form a bond represented by Rh-O-M (M is an additional element in a support). Accordingly, when a large amount of rare earth element exists on the surface of the primary particle of the support, the supported rhodium particles hardly move, whereby grain growth of rhodium is effectively inhibited. The primary particle contains the additional element not only in the surface layer part but also in a part (inner layer part) inside the surface concentrated region. In the case where the percentage content of the rare earth element is increased not locally but wholly in the primary particle, including the internal layer part, however, while interaction with a catalyst metal, such as rhodium, is enhanced, grain growth of the support itself is likely to be accelerated. Accordingly the grain growth of the catalyst metal cannot be sufficiently inhibited.

Furthermore, in the inorganic oxide of the present invention, the percentage content of the additional element and an amount of the additional element in the above-described surface concentrated region are each adjusted in an appropriate range. Therefore, from these speculations, the present inventors conclude that the above-described actions are sufficiently exerted in the inorganic oxide; thus, it can exhibit excellent heat resistance.

According to the present invention, it is possible to provide the inorganic oxide having excellent heat resistance and a catalyst for purification of exhaust gas obtained by using the inorganic oxide.

### Detailed Description of the Preferred Embodiments

The present invention is described below in detail according to the preferred embodiments.

### <Inorganic oxide>

Firstly, an inorganic oxide of the present invention will be described. The inorganic oxide of the present invention is a particulate inorganic oxide comprising an aluminum oxide, a metal oxide forming no composite oxide with an aluminum oxide, and at least one additional element selected from the group consisting of rare earth elements and alkaline earth elements. In the inorganic oxide of the present invention, a percentage content of the additional element to a total amount of aluminum in the aluminum oxide, a metal element in the metal oxide, and the additional element is in a range from 1.1 at% to 8.0 at% in terms of element content. At least 80% of primary particles in the inorganic oxide have a particle diameter of 100 nm or smaller. At least a part of the primary particles have a surface concentrated region where a percentage content of the additional element is locally increased in a surface layer part thereof. The content of the additional element in the surface concentrated region to a whole amount of the inorganic oxide is in a range from 0.06 % by mass to 0.98 % by mass in terms of oxide amount.

### (Aluminum oxide)

The inorganic oxide of the present invention contains an aluminum oxide, a metal oxide which will be described below, and an additional element which will be described below. The aluminum oxide (Al₂O₃) may be amorphous (for example, activated alumina) or crystalline.

In the present invention, a percentage content of the aluminum oxide to the total amount of aluminum in the aluminum oxide, a metal element in the metal oxide which will be described below, and the additional element which will be described below is preferably in a range from 48 at% to 95 at%, and more preferably in a range from 50 at% to 80 at%, in terms of element content. If the percentage content of the aluminum oxide is less than the above lower limit, or exceeds the above upper limit, the effect that grain growth of a catalyst metal is inhibited tends to be decreased when the obtained inorganic oxide is used as a support.

### (Metal oxide)

The metal oxide related to the present invention is an oxide forming no composite oxide with an aluminum oxide, said oxide containing zirconium oxide. Upon being combined together, the metal oxide and an aluminum oxide form no primary particle comprising a composite oxide in which they are in a state of a substantially homogeneous solid solution or dispersion each other. Such a metal oxide forms a primary particle different from a primary particle comprising an aluminum oxide in a major proportion, when a coprecipitate of aluminum hydroxide with a hydroxide, which is a precursor of the metal oxide, is calcined. Accordingly, the inorganic oxide of the present invention includes a primary particle comprising an aluminum oxide in a maj or proportion and a primary particle comprising a metal oxide other than an aluminum oxide in a major proportion. It is possible to confirm that these primary particles are formed independently by an analytical method, such as a method which will be described below.

Examples and Reference Examples of such a metal oxide include metal oxides containing at least one oxide selected from the group consisting of zirconium oxide (ZrO₂), silicon oxide (SiO₂), and titanium oxide (TiO₂). The metal oxide used according to the invention contains zirconium oxide which is preferably at least one oxide selected from the group consisting of ZrO₂, ZrO₂-CeO₂, ZrO₂-Y₂O₃, ZrO₂-La₂O₃, ZrO₂-Nd₂O₃, and ZrO₂-Pr₂O₃, since a catalyst having particularly excellent heat resistance and catalytic activity can be obtained when such a metal oxide is combined with rhodium serving as a catalyst metal.

In the present invention, a percentage content of the metal oxide to the total amount of the metal element in the metal oxide, the aluminum in the aluminum oxide, and the additional element which will be described below is preferably in a range from 5 at% to 51 at%, and more preferably in a range from 12 at% to 48 at%, in terms of element content. If the percentage content of the metal oxide is less than the above lower limit, activity of steam-reforming reaction tends to be reduced when a catalyst formed by supporting rhodium thereon is used. On the other hand, if the percentage content exceeds the above upper limit, heat resistance of the support itself is likely to be reduced, whereby grain growth of rhodium tends to be insufficiently inhibited.

### (Additional element)

The additional element related to the present invention is at least one element selected from the group consisting of rare earth elements and alkaline earth elements. Examples of such an additional element preferably used include yttrium (Y) ; lanthanum (La); praseodymium (Pr); neodymium (Nd); samarium (Sm) ; europium (Eu), gadolinium (Gd) ; terbium (Tb) ; dysprosium (Dy) ; holmium (Ho) ; erbium (Er) ; thulium (Tm) ; ytterbium (Yb) ; lutetium (Lu); magnesium (Mg); calcium (Ca); strontium (Sr); barium (Ba); scandium (Sc); and cerium (Ce). Among these elements, from the perspective of heat resistance and the like of an obtained inorganic oxide when it serves as a support, Y, La, Pr, Nd, Yb, Mg, Ca, and Ba are more preferable, and La and Nd are particularly preferable. These additional elements can be used either solely or in a combination of more than two elements. Additional elements different between the surface concentrated region, which will be described below, and another region can be contained in the inorganic oxide.

In the inorganic oxide of the present invention, such an additional element exists in the aluminum oxide or the metal oxide in a state of a solid solution or a dispersion or the like. Especially, in order to remarkably exert the effect of the present invention by the additional element, at least a part of the additional element preferably exists in the aluminum oxide or the metal oxide in a state of a solid solution in the inner layer part (a part other than the surface concentrated region, which will be described below) of the primary particle in the inorganic oxide. In this case, both of the aluminum oxide and the metal oxide more preferably contain the additional element existing in a state of a solid solution.

In the present invention, it is required that a percentage content of the additional element to the total amount of the aluminum in the aluminum oxide, the metal element in the metal oxide, and the additional element be in a range from 1.1 at% to 8.0 at% in terms of element content. If the percentage content of the additional element is less than 1.1 at%, in a high temperature environment, the grain growth of the catalyst metal is insufficiently inhibited since crystalline phase of the aluminum oxide and the metal oxide are unstable. On the other hand, if the percentage content exceeds 8.0 at%, the interaction with a catalyst metal is excessively increased, and thereby the catalytic activity is reduced. From the perspective of heat resistance and the like of the obtained inorganic oxide when it serves as a support, the percentage content of the additional element is preferably in a range from 1.5 at% to 5.5 at%.

### (Particulate inorganic oxide)

The inorganic oxide of the present invention is a particulate inorganic oxide comprising the aluminum oxide, the metal oxide, and the additional element. It is required that at least 80% of primary particles in the inorganic oxide in terms of the number of particles have a particle diameter of 100 nm or below in order to enhance the catalytic activity by having a larger specific surface area. A percentage content of the primary particles having a particle diameter of 100 nm or below is more preferably 90% or above, and further preferably 95% or above. This particle diameter is a maximum diameter definable to one particle. The average particle diameter of the primary particles in the whole particulate inorganic oxide is preferably in a range from 1 nm to 50 nm, and more preferably in a range from 3 nm to 40 nm.

Furthermore, at least a part of secondary particles which are each formed by aggregation of the primary particles of the inorganic oxide are preferably formed by aggregation of the primary particles having a particle diameter of 100 nm or below and mainly comprising the aluminum oxide and the primary particles having a particle diameter of 100 nm or below and mainly comprising the metal oxide other than an aluminum oxide. Accordingly, sintering of the support in a high-temperature environment is likely to be more remarkably inhibited.

In this case, "a primary particle mainly comprising an aluminum oxide" refers to a primary particle formed by containing an aluminum oxide in a major proportion. To be more specific, the particle comprising an aluminum oxide in a major proportion contains an aluminum oxide in an amount of at least half or more of the whole components in terms of molar ratio or mass ratio. Likewise, similar expressions, such as "a primary particle mainly comprising a metal oxide" and "a primary particle mainly comprising zirconium oxide" refer to the equivalent definitions as described above.

The particle diameter and composition of the primary particles and the aggregation state of the secondary particles can be confirmed in observation or analysis of the inorganic oxide by an appropriate combination of TEM (transmission electron microscope), SEM (scanning electron microscope), FE-STEM (field-emission scanning transmission electron microscopy), EDX (energy dispersion x-ray detector), XPS (x-ray photoelectron spectroscopy), and the like.

### (Surface concentrated region)

In the present invention, it is necessary that at least a part of the primary particles constituting the inorganic oxide have a surface concentrated region where the percentage content of the additional element is locally increased in the surface layer part thereof. Among the primary particles constituting the inorganic oxide, substantially all of those containing the additional element preferably have such a surface concentrated region. However, some primary particles having no surface concentrated region may be contained in the inorganic oxide as long as the effect of the present invention is not significantly impaired.

Moreover, it is only necessary that the percentage content of the additional element in the surface concentrated region be relatively high to that of the additional element in the further inside region in the particle. Such a surface concentrated region is formed so as to cover a surface of the primary particle upon having a certain degree of depth. However, it is not necessarily required that the surface concentration region completely cover the whole surface of the primary particle. Usually, the percentage content of the additional element in the primary particle is gradually increased from the internal layer towards the surface layer. Accordingly, there is not necessarily a clear interface between the surface concentrated region and a core part of the particle which is located deep to the surface concentrated region.

The additional element in the surface concentrated region exists in the surface layer part of the primary particle in the inorganic oxide. In the present invention, it is necessary that the content of the additional element in the surface concentrated region to the whole amount of the inorganic oxide be in a range from 0.06 % by mass to 0.98 % by mass. If the content of the additional element in the surface concentrated region is less than 0.06 % by mass, an inorganic oxide having excellent heat resistance cannot be obtained because the interaction between the additional element and a catalyst metal, such as rhodium, is insufficient. On the other hand, if the content exceeds 0.98 % by mass, the catalytic activity of the obtained inorganic oxide is decreased in the case where it serves as a support because the interaction with a catalyst metal is too strong.

The additional element in the surface concentrated region is eluted out when the additional element comes in contact with an acid solution, such as a nitric acid solution. Accordingly, an amount of the additional element in the surface concentrated region can be determined by quantifying an amount of the additional element eluted out into the nitric acid solution when the inorganic oxide is brought into contact with the nitric acid solution. For example, 0.1 g of the inorganic oxide is added to 10 ml of a 1 N nitric acid solution, and the mixture is stirred for 2 hours to elute the additional element existing in the surface concentrated region. By quantifying the amount of the additional element eluted in chemical analysis, the additional element in the surface concentrated region can be determined.

The formation of the surface concentrated region in the primary particle of the inorganic oxide can be observed in a method other than the above-described method using the elution of the additional element, for example, a method in which the percentage contents of the additional elements in the surface layer part and the core part of the primary particle are compared with each other by conducting a composition analysis using EDX, SIMS (secondary ion mass spectrometer), or the like. Alternatively, instead of a direct composition analysis of the core part of the primary particle, a composition analysis of the whole inorganic oxide may be conducted using ICP (inductively coupled plasma-atomic emission spectrometer) or the like to determine the percentage content of the additional element as an average value of the whole inorganic oxide, and thereby, it is possible to confirm that the percentage content of the additional element in the surface layer part is higher than the determined average value.

### (Process for producing the inorganic oxide)

The inorganic oxide described above can be preferably obtained, for example, in a following production process including: a coprecipitation step for obtaining a coprecipitate containing aluminum, a metal element forming no composite oxide with an aluminum oxide, and at least one additional element selected from the group consisting of rare earth elements and alkaline earth elements; a first calcination step for obtaining an oxide mixture by the obtained coprecipitate; and a second calcination step for further calcining after causing at least one additional element selected from the group consisting of rare earth elements and alkaline earth elements to attach to the obtained mixture.

The coprecipitate is formed from a solution containing aluminum, the metal element, and the additional element which are dissolved. A percentage content of the aluminum to a total amount of the aluminum, the metal element, and the additional element in this solution is preferably in a range from 48 at% to 95 at%, and more preferably in a range from 50 at% to 80 at%, in terms of element content. If the percentage content of the aluminum in the solution is below the above lower limit, the heat resistance of the obtained inorganic oxide tends to be insufficient. On the other hand, if the percentage content exceeds the above upper limit, the effect that the grain growth of the catalyst metal is inhibited tends to be decreased when the obtained inorganic oxide is used as a support.

A percentage content of the additional element to the total amount of the additional element, the aluminum, and the metal element in the solution is preferably in a range from 0.5 at% to 6.0 at%, and more preferably in a range from 0.5 at% to 5.7 at%, in terms of element content. If the percentage content of the additional element in the solution is below the above lower limit, the inhibition of grain growth of the obtained inorganic oxide tends to be insufficient when the inorganic oxide is used as a support. On the other hand, if the percentage content exceeds the above upper limit, the inhibition of the grain growth of the catalyst metal tends to be insufficient when the obtained inorganic oxide is used as a support.

As the solution, a solution obtained by dissolving a salt or the like of the metal element constituting the inorganic oxide in water, alcohol, or the like can be preferably used. Examples of such a salt include sulfate salt, nitrate salt, hydrochloride salt, acetate salt.

By mixing the solution with an alkaline solution to adjust pH of the solution to be in a range (preferably pH 9 and above) in which hydroxide of each of the metal elements is deposited, a coprecipitate containing aluminum and the like can be formed. As the alkaline solution, a solution of an ammonium or an ammonium carbonate is preferably employed since they can be removed easily by volatilization at the time of calcination, or the like.

In the first calcination step, the obtained coprecipitate is subjected to calcination by heating preferably after centrifuging and washing to obtain an oxide mixture. In the first calcination step, the coprecipitation is appropriately subjected to calcination by heating under an oxidizing atmosphere, such as the air atmosphere, at a temperature in a range from 600°C to 1200°C, preferably for 0.5 hours to 10 hours.

In the second calcination step, after causing the additional element to attach to the oxide mixture, the oxide mixture is further calcined to obtain a particulate inorganic oxide. In this method, while turning into an oxide by the calcination, most of the attached additional elements are caused to exist in the surface layer part of the primary particle, and thereby an inorganic oxide having a surface concentrated region can be obtained.

As a method for causing the additional element to attach as described above, there is exemplified a method in which an oxide mixture is suspended in a solution containing a dissolved salt of additional element (nitrate salt or the like), and the suspension solution is stirred. From the perspective of adjusting the amount of the additional element in the surface concentrated region of the obtained inorganic oxide, a content of the additional element caused to attach to the oxide mixture to the whole amount of the inorganic oxide is preferably in a range from 0.6 at% to 2.8 at%, and more preferably in a range from 0.7 at% to 2.6 at%, in terms of element content.

Furthermore, the calcination temperature in the second calcination step is preferably in a range from 400°C to 1100°C, and more preferably in a range from 500°C to 900°C. If the calcination temperature is below the above lower limit, it is difficult to adjust the surface concentrated region of the obtained inorganic oxide to be in an appropriate range; thus, the interaction between the catalyst metal and the additional element tends not to be appropriately controlled. On the other hand, if the calcination temperature exceeds the above upper limit, the amount of the additional element existing in the surface concentrated region is decreased; thus, the inhibition of the grain growth of the catalyst metal tends to be insufficient. In addition, the calcination time is preferably in a range from 0.5 hours to 10 hours.

### <Catalyst for purification of exhaust gas>

A catalyst for purification of exhaust gas of the present invention is obtained by supporting rhodium on the above-described inorganic oxide of the present invention. In the catalyst for purification of exhaust gas of the present invention, the inorganic oxide of the present invention in which the content of the additional element in the surface concentrated region is appropriately adjusted is used as a support, and thereby, the solid basicity of the support is appropriately controlled. It is assumed that the migration of the supported rhodium is inhibited even in a high-temperature environment by appropriately controlling the solid basicity of the support as described above, and thereby the grain growth thereof is also inhibited. Furthermore, in the case where the catalyst for purification of exhaust gas is used in a real vehicle, the catalyst for purification of exhaust gas is used in a combination with a catalytic component containing a supported catalyst metal, such as platinum or palladium, other than rhodium. In this case, however, since the migration of rhodium is also inhibited, it is possible to inhibit a decrease of the catalytic activity due to the interaction between noble metals, that is, between another catalyst metal and rhodium. Further, since deterioration of rhodium is inhibited, it is possible to inhibit a decrease of NOₓ purification performance in an exhaust gas atmosphere in which a reducing agent excessively exists. It is also assumed that a synergistic combination of the inhibition of the grain growth of rhodium and the control of the solid basicity improves ability to be reduced to rhodium metal and also the low temperature performance (catalytic activity in a low temperature range). Rhodium can be supported on the support by adopting a conventionally well-known method, such as an impregnation method. Further, a catalyst metal, such as platinum or palladium, other than rhodium may be supported on the inorganic oxide of the present invention.

At least a part of rhodium in the catalyst for purification of exhaust gas of the present invention is preferably supported so as to be in contact with the region (the surface concentrated region) where the percentage content of the additional element is locally increased in the surface layer part of the primary particle in the inorganic oxide. By such an arrangement, the effect of the additional element for inhibiting the grain growth of rhodium can be more remarkably exerted.

An amount of rhodium supported is preferably in a range from 0.01 parts by mass to 3 parts by mass, and more preferably in a range from 0.05 parts by mass to 2 parts by mass, and further preferably in a range from 0.1 parts by mass to 1 parts by mass relative to 100 parts by mass of the support, in order to exert a sufficiently high catalytic activity.

Modes for using the catalyst for purification of exhaust gas are not specifically limited. For example, a layer comprising the catalyst for purification of exhaust gas can be formed on the surface of a substrate, such as a monolith substrate in a honeycomb form, a pellet substrate, or a foam substrate, and can be placed in an exhaust flow path of an internal combustion engine or the like prior to use.

### Examples

Hereinafter, the present invention will be described more concretely on the basis of Examples and Comparative Examples. However, the present invention is not limited to the following Examples.

### (Example 1)

Firstly, 1 mol of aluminum nitrate nonahydrate, 0.95 mol of zirconium oxynitrate dihydrate, and 0.01 mol of lanthanum nitrate hexahydrate were dissolved in 1600 mL of ion-exchange water to obtain a solution. Upon being thoroughly stirred, the solution was added to an ammonium water containing ammonia in 1.2 times the amount of the neutralization equivalent to the metal cations in the solution to achieve a pH of the solution of 9 or above. As a result, hydroxides of aluminum, zirconium, and lanthanum were coprecipitated to obtain a hydroxide precursor. The hydroxide precursor thus obtained was centrifuged, thoroughly washed, and then subjected to preliminary calcination in an atmosphere at 400°C for 5 hours. Subsequently, a solid after the preliminary calcination was subjected to calcination (first calcination) by heating in an atmosphere at 700°C for 5 hours and then by further heating at 900°C for 5 hours to obtain a mixture containing aluminum oxide (Al₂O₃), zirconium oxide (ZrO₂), and lanthanum oxide (Lₐ₂O₃) after the first calcination. Composition ratio of the obtained mixture was Al₂O₃/ZrO₂/La₂O₃=50/95/0.5 (molar ratio). In other words, a percentage content of lanthanum in the obtained mixture to a total amount of lanthanum, aluminum, and zirconium was 0.5 at% in terms of element content.

Next, 49 g of the obtained mixture was suspended in a neodymium nitrate aqueous solution containing 2.6 g (an amount of 2 % by mass to a whole amount of an inorganic oxide to be obtained in terms of neodymium oxide content) of dissolved neodymium nitrate hexahydrate to obtain a suspension. The suspension was stirred for 2 hours. Then, a solid remaining after evaporating the water from the suspension was subjected to calcination (second calcination) by heating in an atmosphere at 110°C for 12 hours and then by further heating in an atmosphere at 900°C for 5 hours to obtain a particulate inorganic oxide. A percentage content of additional elements (lanthanum and neodymium) in the obtained inorganic oxide to a total amount of lanthanum, neodymium, aluminum, and zirconium was 1.6 at% in terms of element content. Furthermore, the obtained inorganic oxide was observed by a TEM, and it was found that 80% or more of primary particles therein had a particle diameter of 100 nm or below.

Next, the obtained inorganic oxide, which serves as a support, was added to an Rh(NO₃)₃ aqueous solution, followed by stirring. Then, a solid remaining after evaporating the water was subjected to calcination by heating in an atmosphere at 500°C for 3 hours, then shaped into a pellet having a diameter φ in a range from 0.5 mm to 1 mm to obtain a catalyst for purification of exhaust gas in which rhodium was supported on the support. An amount of the supported rhodium in the obtained catalyst for purification of exhaust gas was approximately 0.5 g relative to 100 g of the support.

### (Example 2)

Except that 1 mol of aluminum nitrate nonahydrate, 0.95 mol of zirconium oxynitrate dihydrate, and 0.05 mol of lanthanum nitrate hexahydrate were dissolved in 1600 mL of ion-exchange water to obtain a solution, the solution was used to form a coprecipitate, and the composition ratio of a mixture was changed to Al₂O₃/ZrO₂/La₂O₃=50/95/2.5 (molar ratio), an inorganic oxide and a catalyst for purification of exhaust gas were obtained in the same manner as in Example 1. A percentage content of additional elements (lanthanum and neodymium) in the obtained inorganic oxide to a total amount of lanthanum, neodymium, aluminum, and zirconium was 3.6 at% in terms of element content, and 80% or more of primary particles therein had a particle diameter of 100 nm or below.

### (Example 3)

Except that 4 mol of aluminum nitrate nonahydrate, 0.95 mol of zirconium oxynitrate dihydrate, and 0.125 mol of lanthanum nitrate hexahydrate were dissolved in 1600 mL of ion-exchange water to obtain a solution, the solution was used to form a coprecipitate, and the composition ratio of a mixture was changed to Al₂O₃/ZrO₂/La₂O₃=200/95/6.25 (molar ratio), an inorganic oxide and a catalyst for purification of exhaust gas were obtained in the same manner as in Example 1. A percentage content of additional elements (lanthanum and neodymium) in the obtained inorganic oxide to a total amount of lanthanum, neodymium, aluminum, and zirconium was 3.3 at% in terms of element content, and 80% or more of primary particles therein had a particle diameter of 100 nm or below.

### (Example 4)

Except that 47.5 g of the mixture after the first calcination obtained in Example 1 was suspended in a neodymium nitrate aqueous solution containing 6.6 g (an amount of 5 % by mass to a whole amount of an inorganic oxide to be obtained in terms of neodymium oxide content) of dissolved neodymium nitrate hexahydrate to obtain a suspension, and the suspension was used, an inorganic oxide and a catalyst for purification of exhaust gas were obtained in the same manner as in Example 1. A percentage content of additional elements (lanthanum and neodymium) in the obtained inorganic oxide to a total amount of lanthanum, neodymium, aluminum, and zirconium was 3.1 at% in terms of element content, and 80% or more of primary particles therein had a particle diameter of 100 nm or below.

### (Example 5)

Except that 2.4 mol of aluminum nitrate nonahydrate, 0.95 mol of zirconium oxynitrate dihydrate, and 0.2 mol of lanthanum nitrate hexahydrate were dissolved in 1600 mL of ion-exchange water to obtain a solution, the solution was used to form a coprecipitate, and the composition ratio of a mixture was changed to Al₂O₃/ZrO₂/La₂O₃=120/95/10 (molar ratio), an inorganic oxide and a catalyst for purification of exhaust gas were obtained in the same manner as in Example 4. A percentage content of additional elements (lanthanum and neodymium) in the obtained inorganic oxide to a total amount of lanthanum, neodymium, aluminum, and zirconium was 7.9 at% in terms of element content, and 80% or more of primary particles therein had a particle diameter of 100 nm or below.

### (Example 6)

Firstly, 1 mol of aluminum nitrate nonahydrate, 0.95 mol of zirconium oxynitrate dihydrate, and 0.05 mol of neodymium nitrate hexahydrate were dissolved in 1600 mL of ion-exchange water to obtain a solution. Upon being thoroughly stirred, the solution was added to an ammonium water containing ammonia in 1.2 times the amount of the neutralization equivalent to the metal cations in the solution to achieve a pH of the solution of 9 or above. As a result, hydroxides of aluminum, zirconium, and neodymium were coprecipitated to obtain a hydroxide precursor. The hydroxide precursor thus obtained was centrifuged, thoroughly washed, and then subjected to preliminary calcination in an atmosphere at 400°C for 5 hours. Subsequently, a solid after the preliminary calcination was subjected to calcination (first calcination) by heating in an atmosphere at 700°C for 5 hours and then by further heating at 900°C for 5 hours to obtain a mixture containing aluminum oxide (Al₂O₃), zirconium oxide (ZrO₂), and neodymium oxide (Nd₂O₃) after the first calcination. Composition ratio of the obtained mixture was Al₂O₃/ZrO₂/Nd₂O₃=50/95/2.5 (molar ratio). In other words, a percentage content of neodymium in the obtained mixture to a total amount of neodymium, aluminum, and zirconium was 2.5 at% in terms of element content.

Next, 49 g of the obtained mixture was suspended in a lanthanum nitrate aqueous solution containing 2.6 g (an amount of 2 % by mass to a whole amount of an inorganic oxide to be obtained in terms of lanthanum oxide content) of dissolved lanthanum nitrate hexahydrate to obtain a suspension. The suspension was stirred for 2 hours. Then, a solid remaining after evaporating the water from the suspension was subjected to calcination (second calcination) by heating in an atmosphere at 110°C for 12 hours and then by further heating in an atmosphere at 900°C for 5 hours to obtain a particulate inorganic oxide. A percentage content of additional elements (lanthanum and neodymium) in the obtained inorganic oxide to a total amount of lanthanum, neodymium, aluminum, and zirconium was 3.6 at% in terms of element content. Furthermore, the obtained inorganic oxide was observed by a TEM, and it was found that 80% or more of primary particles therein had a particle diameter of 100 nm or below.

Next, the obtained inorganic oxide, which serves as a support, was added to an Rh(NO₃)₃ aqueous solution, followed by stirring. The solid remaining after evaporating the water was subjected to calcination by heating in an atmosphere at 500°C for 3 hours, and then shaped into a pellet having a diameter φ in a range from 0.5 mm to 1 mm to obtain a catalyst for purification of exhaust gas in which rhodium was supported on the support. An amount of the supported rhodium in the obtained catalyst for purification of exhaust gas was approximately 0.5 g in 100 g of the support.

### (Example 7)

Except that 2.4 mol of aluminum nitrate nonahydrate, 0.95 mol of zirconium oxynitrate dihydrate, and 0.2 mol of neodymium nitrate hexahydrate were dissolved in 1600 mL of ion-exchange water to obtain a solution, the solution was used to form a coprecipitate, and the composition ratio of a mixture was changed to Al₂O₃/ZrO₂/Nd₂O₃=120/95/10 (molar ratio), that 47.5 g of the mixture was suspended in a lanthanum nitrate aqueous solution containing 6.5 g (an amount of 5 % by mass to a whole amount of an inorganic oxide to be obtained in terms of lanthanum oxide content) of dissolved lanthanum nitrate hexahydrate to obtain a suspension, and the suspension was used, and that the temperature of the second calcination was changed to 1000°C, an inorganic oxide and a catalyst for purification of exhaust gas were obtained in the same manner as in Example 6. A percentage content of additional elements (lanthanum and neodymium) in the obtained inorganic oxide to a total amount of lanthanum, neodymium, aluminum, and zirconium was 7.9 at% in terms of element content, and 80% or more of primary particles therein had a particle diameter of 100 nm or below.

### (Example 8)

Except that 2.4 mol of aluminum nitrate nonahydrate, 0.95 mol of zirconium oxynitrate dihydrate, and 0.05 mol of lanthanum nitrate hexahydrate were dissolved in 1600 mL of ion-exchange water to obtain a solution, the solution was used to form a coprecipitate, and the composition ratio of a mixture was changed to Al₂O₃/ZrO₂/La₂O₃=120/95/2.5 (molar ratio), and that the temperature of the second calcination was changed to 500°C, an inorganic oxide and a catalyst for purification of exhaust gas were obtained in the same manner as in Example 1. A percentage content of additional elements (lanthanum and neodymium) in the obtained inorganic oxide to a total amount of lanthanum, neodymium, aluminum, and zirconium was 1.1 at% in terms of element content, and 80% or more of primary particles of therein had a particle diameter of 100 nm or below.

### (Comparative Example 1)

Except that 1 mol of aluminum nitrate nonahydrate, and 0.95 mol of zirconium oxynitrate dihydrate were dissolved in 1600 mL of ion-exchange water to obtain a solution, the solution was used to form a coprecipitate, and the composition ratio of a mixture was changed to Al₂O₃/ZrO₂=50/95 (molar ratio), an inorganic oxide and a catalyst for purification of exhaust gas for comparison were obtained in the same manner as in Example 1. A percentage content of an additional elements (neodymium) in the obtained inorganic oxide to a total amount of neodymium, aluminum, and zirconium was 0.6 at% in terms of element content, and 80% or more of primary particles therein had a particle diameter of 100 nm or below.

### (Comparative Example 2)

Except that 1 mol of aluminum nitrate nonahydrate, 0.95 mol of zirconium oxynitrate dihydrate, and 0.2 mol of lanthanum nitrate hexahydrate were dissolved in 1600 mL of ion-exchange water to obtain a solution, the solution was used to form a coprecipitate, and the composition ratio of a mixture was changed to Al₂O₃/ZrO₂/La₂O₃=50/95/10 (molar ratio), an inorganic oxide and a catalyst for purification of exhaust gas for comparison were obtained in the same manner as in Example 1. A percentage content of additional elements (lanthanum and neodymium) in the obtained inorganic oxide to a total amount of lanthanum, neodymium, aluminum, and zirconium was 10.3 at% in terms of element content, and 80% or more of primary particles therein had a particle diameter of 100 nm or below.

### (Comparative Example 3)

Except that 47.5 g of the mixture after the first calcination obtained in Example 2 was suspended in a lanthanum nitrate aqueous solution containing 6.5 g (an amount of 5 % by mass to a whole amount of an inorganic oxide to be obtained in terms of lanthanum oxide content) of dissolved lanthanum nitrate hexahydrate to obtain a suspension, and the suspension was used, and that the temperature of the second calcination was changed to 500°C, an inorganic oxide and a catalyst for purification of exhaust gas for comparison were obtained in the same manner as in Example 2. A percentage content of an additional element (lanthanum) in the obtained inorganic oxide to a total amount of lanthanum, aluminum, and zirconium was 5.1 at% in terms of element content, and 80% or more of primary particles therein had a particle diameter of 100 nm or below.

### (Comparative Example 4)

Except that 47.5 g of the mixture after the first calcination obtained in Example 2 was not immersed in the neodymium nitrate aqueous solution, an inorganic oxide and a catalyst for purification of exhaust gas for comparison were obtained in the same manner as in Example 2. A percentage content of an additional element (lanthanum) in the inorganic oxide to a total amount of lanthanum, aluminum, and zirconium was 2.5 at% in terms of element content, and 80% or more of primary particles therein had a particle diameter of 100 nm or below.

### (Comparative Example 5)

Except that 47.5 g of the mixture after the first calcination obtained in Example 2 was suspended in a lanthanum nitrate aqueous solution containing 6.6 g (an amount of 5 % by mass to a whole amount of an inorganic oxide to be obtained in terms of neodymium oxide content) of dissolved neodymium nitrate hexahydrate to obtain a suspension, and the suspension was used, and that the temperature of the second calcination was changed to 500°C, an inorganic oxide and a catalyst for purification of exhaust gas for comparison were obtained in the same manner as in Example 2. A percentage content of additional elements (lanthanum and neodymium) in the obtained inorganic oxide to a total amount of lanthanum, neodymium, aluminum, and zirconium was 5.1 at% in terms of element content, and 80% or more of primary particles therein had a particle diameter of 100 nm or below.

### (Comparative Example 6)

Except that 47.5 g of the mixture after the first calcination obtained in Example 2 was suspended in a lanthanum nitrate aqueous solution containing 6.5 g (an amount of 5 % by mass to a whole amount of an inorganic oxide to be obtained in terms of lanthanum oxide content) of dissolved lanthanum nitrate hexahydrate to obtain a suspension, and the suspension was used, and that the temperature of the second calcination was changed to 500°C, an inorganic oxide and a catalyst for purification of exhaust gas for comparison were obtained in the same manner as in Example 2. A percentage content of an additional element (lanthanum) in the obtained inorganic oxide to a total amount of lanthanum, aluminum, and zirconium was 5.1 at% in terms of element content, and 80% or more of primary particles therein had a particle diameter of 100 nm or below.

### (Comparative Example 7)

Except that 47.5 g of the mixture after the first calcination obtained in Example 2 was suspended in a neodymium nitrate aqueous solution containing 6.6 g (an amount of 5 % by mass to a whole amount of an inorganic oxide to be obtained in terms of neodymium oxide content) of dissolved neodymium nitrate hexahydrate to obtain a suspension, and the suspension was used, an inorganic oxide and a catalyst for purification of exhaust gas for comparison were obtained in the same manner as in Example 2. A percentage content of additional elements (lanthanum and neodymium) in the obtained inorganic oxide to a total amount of lanthanum, neodymium, aluminum, and zirconium was 5.1 at% in terms of element content, and 80% or more of primary particles therein had a particle diameter of 100 nm or below.

### (Comparative Example 8)

Except that 1 mol of aluminum nitrate nonahydrate, 0.95 mol of zirconium oxynitrate dihydrate, and 0.1 mol of lanthanum nitrate hexahydrate were dissolved in 1600 mL of ion-exchange water to obtain a solution, the solution was used to form a coprecipitate, and the composition ratio of a mixture was changed to Al₂O₃/ZrO₂/La₂O₃=50/95/5 (molar ratio), an inorganic oxide and a catalyst for purification of exhaust gas for comparison were obtained in the same manner as in Comparative Example 7. A percentage content of additional elements (lanthanum and neodymium) in the obtained inorganic oxide to a total amount of lanthanum, neodymium, aluminum, and zirconium was 7.6 at% in terms of element content, and 80% or more of primary particles therein had a particle diameter of 100 nm or below.

### <Measurement of amount of additional element in surface concentrated region>

Firstly, 0.1 g of the inorganic oxide obtained in each of Examples 1 to 8 and Comparative Examples 1 to 8 was stirred in 10 cm³ of 1 N nitric acid for 1 hour, and then the filtrate was extracted. Then, amounts of the additional elements (La, Nd) dissolved in the obtained filtrate were measured by inductively coupled plasma atomic emission spectroscopy (ICP-AES). By regarding the amount of the additional element dissolved in the filtrate as an amount of the additional element in the surface concentrated region in 0.1 g of the inorganic oxide, an amount of the additional element to the whole amount of the inorganic oxide was calculated. The amount of the additional element was indicated in terms of mass of oxide in the inorganic oxide.

### <Evaluation of heat resistance of catalyst>

Firstly, a durability test was conducted on the catalysts for purification of exhaust gas obtained in Examples 1 to 8 and Comparative Examples 1 to 8. To be more specific, a rich gas containing CO (2%), CO₂ (10%), O₂ (0%), H₂O (3%), and N₂ (balance) and a lean gas containing CO (0%), CO₂ (10%), O₂ (1%), H₂O (3%), and N₂ (balance) were alternately supplied to the catalyst for purification of exhaust gas in 5-minutes shifts for 50 hours at a temperature of 1000°C and a space velocity (SV) of 10000 h⁻¹.

Next, rhodium-reducing property of the catalysts for purification of exhaust gas after the durability test was evaluated. To be more specific, the hydrogen consumption of the catalyst for purification of exhaust gas after the durability test was measured using a temperature-programmed desorption (TPD) apparatus (manufactured by Ohkura Riken Co., Ltd.) as the measurement apparatus under the following conditions according to the H₂-TPD method. Hydrogen consumption is an indicator reflecting both ease that rhodium oxide is reduced into a metal state and the number of effective active sites of rhodium. It is considered that the catalytic activity is higher as the measured value is larger. It is possible to determine that the heat resistance of the catalyst is better as the measured value of hydrogen consumption is larger.
Pretreatment: O₂ (20%)/Ar, 20 ml/min, 500°C, 10 min
Measurement: H₂ (2%)/Ar, 20 ml/min, 30°C -> 600°C, 20°C/min
Amount of catalyst: 0.4 g
Detector: mass spectrometer.

### <Evaluation result>

The amounts of the additional element in the surface concentrated region of the inorganic oxides obtained in Examples 1 to 8 and Comparative Examples 1 to 8 and the hydrogen consumption in the catalysts for purification of exhaust gas are shown in Table 1. Table 1 also shows the element species and the percentage contents of the additional element in the mixtures after the first calcination and the inorganic oxides obtained in the Examples 1 to 8 and Comparative Examples 1 to 8.

**[Table 1]**

| | Additional element in mixture after first calcination | | Additional element in inorganic oxide | | Amount of additional element in surface concentrated region of inorganic oxide (wt%) | Hydrogen consumption of catalyst (µmol/g) |
|---|---|---|---|---|---|---|
| | Element species | Percentage content (at%) | Element species | Percentage content (at%) | | |
| Ex. 1 | La | 0.5 | La and Nd | 1.6 | 0.08 | 36.5 |
| Ex. 2 | La | 2.5 | La and Nd | 3.6 | 0.49 | 34.8 |
| Ex. 3 | La | 2.6 | La and Nd | 3.3 | 0.61 | 42.0 |
| Ex. 4 | La | 0.5 | La and Nd | 3.1 | 0.82 | 34.5 |
| Ex. 5 | La | 5.6 | La and Nd | 7.9 | 0.90 | 38.5 |
| Ex. 6 | Nd | 2.5 | La and Nd | 3.6 | 0.38 | 36.9 |
| Ex. 7 | Nd | 5.6 | La and Nd | 7.9 | 0.09 | 38.1 |
| Ex. 8 | La | 0.4 | La and Nd | 1.1 | 0.86 | 37.9 |
| Comp. Ex. 1 | La | 0.0 | La and Nd | 0.6 | 0.19 | 28.8 |
| Comp. Ex. 2 | La | 9.3 | La and Nd | 10.3 | 0.38 | 31.6 |
| Comp. Ex. 3 | La | 2.5 | La | 5.1 | 3.06 | 32.0 |
| Comp. Ex. 4 | La | 2.5 | La | 2.5 | 0.00 | 22.5 |
| Comp. Ex. 5 | La | 2.5 | La and Nd | 5.1 | 2.91 | 20.5 |
| Comp. Ex. 6 | La | 2.5 | La | 5.1 | 1.21 | 21.2 |
| Comp. Ex. 7 | La | 2.5 | La and Nd | 5.1 | 1.19 | 22.5 |
| Comp. Ex. 8 | La | 4.9 | La and Nd | 7.6 | 1.10 | 32.0 |

As apparent from the results shown in Table 1, in the catalysts (Examples 1 to 8) obtained by using the inorganic oxide of the present invention, in which the percentage content of the additional element and the amount of the additional element in the surface concentrated region were adjusted in a specific range, their hydrogen consumptions even after the durability test were large and their catalytic activities were excellent. Accordingly, it was confirmed that the catalyst for purification of exhaust gas obtained by using the inorganic oxide of the present invention had excellent heat resistance.

### Industrial Applicability

As described above, according to the present invention, it is possible to provide an inorganic oxide having excellent heat resistance and a catalyst for purification of exhaust gas obtained by using the inorganic oxide.

## Claims

1. A particulate inorganic oxide, comprising:
an aluminum oxide;
a metal oxide forming no composite oxide with an aluminium oxide, said metal oxide containing zirconium oxide; and
at least one additional element selected from the group consisting of rare earth elements and alkaline earth elements, wherein
the content of the additional element relative to the combined total amount of aluminum in the aluminum oxide, the metal element in the metal oxide, and the additional element is in a range from 1.1 at% to 8.0 at% in terms of element content,
at least 80% of primary particles in the inorganic oxide have a particle diameter of 100 nm or smaller,
at least a part of the primary particles have a surface concentrated region where the content of the additional element is locally increased in a surface layer part, and
the content of the additional element in the surface concentrated region based on the whole amount of the inorganic oxide is in a range from 0.06 % by mass to 0.98 % by mass in terms of oxide amount.

2. The inorganic oxide according to claim 1, wherein the metal oxide contains at least one oxide selected from the group consisting of ZrO₂, ZrO₂-CeO₂, ZrO₂-Y₂O₃, ZrO₂-La₂O₃, ZrO₂-Nd₂O₃, and ZrO₂-Pr₂O₃.

3. The inorganic oxide according to claim 1, wherein the additional element is at least one element selected from the group consisting of Y, La, Pr, Nd, Sm, Eu, Gd, Tb, Dy, Ho, Er, Tm, Yb, Lu, Mg, Ca, Sr, Ba, Sc, and Ce.

4. The inorganic oxide according to claim 3, wherein the additional element is at least one element selected from the group consisting of Y, La, Pr, Nd, Yb, Mg, Ca, and Ba.

5. The inorganic oxide according to claim 4, wherein the additional element is at least one element selected from the group consisting of La and Nd.

6. A catalyst for purification of exhaust gas, wherein rhodium is supported on the inorganic oxide according to any one of claims 1 to 5.

## Patentansprüche

1. Partikelförmiges anorganisches Oxid, umfassend:
ein Aluminiumoxid,
ein Metalloxid, das kein Mischoxid mit dem Aluminiumoxid bildet, wobei das besagte Metalloxid Zirconiumoxid enthält; und
mindestens ein zusätzliches Element, das aus der Gruppe ausgewählt ist, die aus Seltenerdenelementen und Erdalkalielementen besteht, wobei
der Gehalt des zusätzlichen Elementes relativ zu der kombinierten Gesamtmenge des Aluminiums in dem Aluminiumoxid, des Metallelementes in dem Metalloxid und des zusätzlichen Elementes in einem Bereich von 1,1 at% bis 8,0 at% liegt, was den Elementgehalt betrifft.
mindestens 80% der primären Partikel in dem anorganischen Oxid einen Partikeldurchmesser von 100 nm oder kleiner aufweisen,
mindestens ein Teil der primären Partikel eine oberflächenkonzentrierte Region aufweisen, wo der Gehalt des zusätzlichen Elementes lokal in einer Oberflächenschicht erhöht ist, und
der Gehalt des zusätzlichen Elementes in der oberflächenkonzentrierten Region basierend auf der Gesamtmenge des anorganischen Oxides in einem Bereich von 0,06 % nach Masse bis 0,98 % nach Masse liegt, was die Oxidmenge betrifft.

2. Anorganisches Oxid nach Anspruch 1, wobei das Metalloxid mindestens ein Oxid enthält, das aus der Gruppe ausgewählt ist, die aus ZrO₂, ZrO₂-CeO₂, ZrO₂-Y₂O₃, ZrO₂-La₂O₃, ZrO₂-Nd₂O₃ und ZrO₂-Pr₂O₃ besteht.

3. Anorganisches Oxid nach Anspruch 1, wobei das zusätzliche Element mindestens ein Element ist, das aus der Gruppe ausgewählt ist, die aus Y, La, Pr, Nd, Sm, Eu, Gd, Tb, Dy, Ho, Er, Tm, Yb, Lu, Mg, Ca, Sr, Ba, Sc und Ce besteht.

4. Anorganisches Oxid nach Anspruch 3, wobei das zusätzliche Element mindestens ein Element ist, das aus der Gruppe ausgewählt ist, die aus Y, La, Pr, Nd, Yb, Mg, Ca und Ba besteht.

5. Anorganisches Oxid nach Anspruch 4, wobei das zusätzliche Element mindestens ein Elemet ist, das aus der Gruppe ausgewählt ist, die aus La und Nd besteht.

6. Katalysator zur Reinigung von Abgas, wobei Rhodium auf dem anorganischen Oxid gemäß einem der Ansprüche 1 bis 5 geträgert ist.

## Revendications

1. Oxyde inorganique particulaire, comprenant :
un oxyde d'aluminium ;
un oxyde de métal ne formant pas d'oxyde composite avec un oxyde d'aluminium, ledit oxyde de métal contenant de l'oxyde de zirconium ; et
au moins un élément supplémentaire choisi dans le groupe constitué des terres rares et des éléments alcalino-terreux, dans lequel
la concentration de l'élément supplémentaire par rapport à la quantité totale combinée de l'aluminium dans l'oxyde d'aluminium, de l'élément métallique dans l'oxyde de métal, et de l'élément supplémentaire est dans la plage de 1,1 % atomique à 8,0 % atomique en termes de teneur élémentaire,
au moins 80 % des particules primaires de l'oxyde inorganique ont un diamètre des particules inférieur ou égal à 100 nm,
au moins une partie des particules primaires présentent une région concentrée en surface dans laquelle la concentration de l'élément supplémentaire est localement accrue dans une partie de la couche superficielle, et
la concentration de l'élément supplémentaire dans la région concentrée en surface par rapport à la quantité totale de l'oxyde inorganique est dans la plage de 0,06 % en masse à 0,98 % en masse en termes de quantité d'oxyde.

2. Oxyde inorganique selon la revendication 1, dans lequel l'oxyde de métal contient au moins un oxyde choisi dans le groupe constitué du ZrO₂, du ZrO₂-CeO₂, du ZrO₂-Y₂O₃, du ZrO₂-La₂O₃, du ZrO₂-Nd₂O₃ et du ZrO₂-Pr₂O₃.

3. Oxyde inorganique selon la revendication 1, dans lequel l'élément supplémentaire est au moins un élément choisi dans le groupe constitué des éléments Y, La, Pr, Nd, Sm, Eu, Gd, Tb, Dy, Ho, Er, Tm, Yb, Lu, Mg, Ca, Sr, Ba, Sc et Ce.

4. Oxyde inorganique selon la revendication 3, dans lequel l'élément supplémentaire est au moins un élément choisi dans le groupe constitué des éléments Y, La, Pr, Nd, Yb, Mg, Ca et Ba.

5. Oxyde inorganique selon la revendication 4, dans lequel l'élément supplémentaire est au moins un élément choisi dans le groupe constitué du La et du Nd.

6. Catalyseur de purification de gaz d'échappement, dans lequel le rhodium est porté par l'oxyde inorganique selon l'une quelconque des revendications 1 à 5.
